# EUROPEAN PATENT APPLICATION

(11) **EP 4 814 205 A1**
(43) Date of publication of application: **30.09.2026**
(21) Application number: 23959537.4
(22) Date of filing: 22.11.2023
(51) Int. Cl.: E02F 3/43, E02F 9/26, E02F 9/20, E02F 9/24

(54) **METHOD AND SYSTEM FOR CONTROLLING EXCAVATOR**

(71) Applicant: Volvo Construction Equipment AB, 631 85 Eskilstuna (SE)
(72) Inventor: KIM, Jiyun, Changwon-si, Gyeongsangnam-do 51710 (KR)
(74) Representative: Kransell & Wennborg KB
(86) International application number: PCT/KR2023/018932
(87) International publication number: WO 2025/110280

(57) **Abstract**

One aspect of the present disclosure relates to a method for controlling an excavator to automatically return a bucket having loaded an object onto a load receiver to a digging position, the method comprising the steps of: setting position coordinates (Xrt, Yrt, Zrt) of a destination point, which is a digging position to which the bucket will return, by means of an operation unit; selecting and activating an automatic digging position return function by means of a display controller; detecting a load receiver or an obstacle within a maximum swing radius and acquiring information necessary to perform the automatic digging position return function, by means of a receiving unit; and performing the automatic digging position return function by means of a control unit such that the bucket returns to the destination point on the basis of the acquired information.

## Description

### Technical Field

The present disclosure generally relates to a method and a system for controlling an excavator. In a particular aspect, the present disclosure relates to a method and a system for controlling the movement of a bucket, an arm, a boom, and an upper swing structure such that the bucket having loaded an object onto a load receiver may efficiently return to a digging position. The present disclosure may be applied to large vehicles, such as trucks, buses, and construction equipment, among various vehicle types. Although the present disclosure may be described with respect to specific vehicles, the present disclosure is not limited to any particular type of vehicle.

### Background Art

An excavator is a type of construction machinery that performs various operations at construction sites and the like, including excavation work for digging earth, loading work for transporting excavated soil and loading the same onto a load receiver, trenching work for foundation construction, crushing work for building demolition, leveling work for ground preparation, and grading work for surface smoothing.

The excavator may generally include a lower traveling structure that serves to move the equipment, an upper swing structure that is swingably mounted on the lower traveling structure, and a working device (a boom, an arm, a bucket, etc.) that is mounted in front of the upper swing structure.

In such an excavator, excavation work, loading work, and the like are generally controlled by manual operation of an operator, and there is a problem in that the operation is complex and the operating skills of individual operators vary, so that excavation and loading results are achieved differently depending on the operator.

Accordingly, there is an increasing demand for an autonomous excavation and loading technology capable of solving the above-described problems and accurately determining excavation and loading trajectories.

### Summary of the Invention

### Technical Problem

The present disclosure is intended to solve the problems of the background art described above, and an object of the present disclosure is to provide a method and a system for controlling the movement of a bucket, an arm, a boom, and an upper swing structure such that the bucket having loaded an object onto a load receiver may automatically return to a digging position.

### Technical Solution

A first aspect of the present disclosure provides a method for controlling an excavator to automatically return a bucket having loaded an object onto a load receiver to a digging position, the method comprising the steps of: setting position coordinates (Xrt, Yrt, Zrt) of a destination point, which is a digging position to which the bucket will return, by means of an operation unit; selecting and activating an automatic digging position return function by means of a display controller; detecting a load receiver or an obstacle within a maximum swing radius and acquiring information necessary to perform the automatic digging position return function, by means of a receiving unit; and performing the automatic digging position return function by means of a control unit such that the bucket returns to the destination point on the basis of the acquired information.

In some examples, optionally including at least one preferred example, the step of performing the automatic digging position return function may include the steps of: calculating a swing angle θlr that allows for avoiding interference with the load receiver or the obstacle during a swing operation of an upper swing structure for returning to the digging position, on the basis of the acquired information of the load receiver or the acquired information of the obstacle; calculating a target rotational angle of one or more of a boom, an arm, and a bucket for the bucket to return to the position coordinates (Xrt, Yrt, Zrt) of the destination point, and a target swing angle of the upper swing structure, on the basis of the position coordinates (Xrt, Yrt, Zrt) of the destination point; moving the boom such that a lowermost end of the bucket is positioned higher than an uppermost point of the obstacle when it is determined that the uppermost point of the obstacle is higher than an uppermost point of the load receiver; and swinging the upper swing structure on the basis of the target swing angle; and moving one or more of the boom, the arm, and the bucket until the bucket arrives at the position coordinates (Xrt, Yrt, Zrt) of the destination point, when it is determined that the swing angle of the upper swing structure exceeds the θlr and the upper swing structure has entered a swing braking section.

In some examples, optionally including at least one preferred example, in the step of swinging the upper swing structure, operations of the boom, the arm, and the bucket may not be allowed in order to prevent collision with the load receiver or the obstacle in a state where the swing angle of the upper swing structure does not reach the θlr.

In some examples, optionally including at least one preferred example, the method may further comprise a step of determining whether the bucket has arrived at the destination point by the control unit.

In some examples, including optionally at least one preferred example, in the step of determining whether the bucket has arrived at the destination point, when it is determined that the bucket has reached the destination point within a preset time, the display controller may display that the automatic digging position return function has been completed, and when it is determined that the bucket has not arrived at the destination point within the preset time, the determination may be recognized as an error and displayed on the display controller, while the automatic digging position return function may be performed until the bucket arrives at the destination point.

A second aspect of the present disclosure provides a system for controlling an excavator to automatically return a bucket having loaded an object onto a load receiver to a digging position, the system comprising: an operation unit that sets position coordinates (Xrt, Yrt, Zrt) of a destination point, which is a digging position to which the bucket will return; a drive unit including a boom, an arm, and an upper swing structure; a receiving unit that detects a load receiver or an obstacle within a maximum swing radius and acquires information necessary to perform an automatic digging position return function; a display controller that activates the automatic digging position return function and displays the information acquired by the receiving unit, the display controller serving as an input/output interface for receiving a user input and outputting information; and a control unit that performs the automatic digging position return function by controlling the drive unit such that the bucket returns to the destination point, on the basis of the information acquired by the receiving unit and the position coordinates (Xrt, Yrt, Zrt) of the destination point.

In some examples, optionally including at least one preferred example, the control unit may calculate a swing angle θlr that allows for avoiding interference with the load receiver or the obstacle during a swing operation of the upper swing structure for returning to the digging position, on the basis of the acquired information of the load receiver or the acquired information of the obstacle, may calculate a target rotational angle of one or more of the boom, the arm, and the bucket for the bucket to return to the position coordinates (Xrt, Yrt, Zrt) of the destination point, and a target swing angle of the upper swing structure, on the basis of the position coordinates (Xrt, Yrt, Zrt) of the destination point, and moves the boom such that a lowermost end of the bucket is positioned higher than a highest point of the obstacle when it is determined that the uppermost end point of the obstacle is higher than a highest point of the load receiver, and may move the boom such that a lowermost end of the bucket is positioned higher than a highest point of the obstacle when it is determined that the highest point of the obstacle is higher than an uppermost end point of the load receiver, and may swing the upper swing structure on the basis of the target swing angle, and may move one or more of the boom, the arm, and the bucket until the bucket arrives at the position coordinates (Xrt, Yrt, Zrt) of the destination point, when it is determined that the swing angle of the upper swing structure exceeds the θlr and the upper swing structure has entered a swing braking section.

In some examples, optionally including at least one preferred example, the control unit may not allow operations of the boom, the arm, and the bucket to prevent collision with the load receiver or the obstacle in a state where the swing angle of the upper swing structure does not reach the θlr.

In some examples, optionally including at least one preferred example, the control unit may determine whether the bucket has arrived at the destination point, wherein, when it is determined that the bucket has reached the destination point within a preset time, the control unit may cause the display controller to display that the automatic digging position return function has been completed, and wherein, when it is determined that the bucket has not arrived at the destination point within the preset time, the control unit may recognize the determination as an error and cause the display controller to display the same, while performing the automatic digging position return function until the bucket arrives at the destination point.

### Advantageous Effects

The method and the system for controlling an excavator according to the present disclosure may improve work efficiency and operator convenience by performing the automatic digging position return function that automatically returns the bucket having loaded the object onto the load receiver to the digging position.

The effects of the present disclosure are not limited to those described above, and should be understood to include all effects that may be inferred from the detailed description of the present disclosure or the configuration of the disclosure described in the claims.

The disclosed aspects, embodiments (including any preferred embodiments), and/or accompanying claims may be appropriately combined as will be apparent to those skilled in the art.

Additional features and advantages are set forth in the following description, claims, and drawings, and in part will be readily apparent to those skilled in the art or may be appreciated by practicing the disclosure as described herein.

### Brief Description of the Drawings

Hereinafter, examples will be described in more detail with reference to the accompanying drawings.
FIG. 1 is a diagram illustrating a drive unit of an excavator according to one aspect of the present disclosure.
FIG. 2 is a block diagram schematically illustrating a configuration of a system for controlling an excavator according to one aspect of the present disclosure.
FIGS. 3 and 4 are flowcharts illustrating a method for controlling an excavator according to one embodiment.
FIGS. 5 and 6 are conceptual diagrams illustrating a movement trajectory of an excavator performing an automatic digging position return function according to one embodiment.
FIG. 7 is a diagram illustrating information of a load receiver necessary to perform the automatic digging position return function according to one embodiment.
FIG. 8 is a diagram illustrating a step of calculating θlr according to one embodiment.

### Detailed Description of the Invention

The detailed description set forth below provides information and examples of the disclosed technology along with sufficient detail to enable those skilled in the art to practice the present disclosure. However, the present disclosure may be implemented in various different forms and is therefore not limited to the aspects described herein. In addition, in order to clearly describe the present disclosure in the drawings, parts irrelevant to the description are omitted, and similar reference numerals are assigned to similar parts throughout the specification.

The terms used herein are merely for describing particular aspects and are not intended to limit the present disclosure. As used herein, a singular form is intended to include a plural form as well, unless the context clearly indicates otherwise. As used herein, the term "and/or" includes all combinations of one or more of the related listed items. As used herein, the terms "comprises" and "comprising" specify the presence of stated features, integers, steps, operations, elements, and/or components, but do not preclude the presence or addition of one or more other functions, integers, steps, operations, elements, components, and/or groups thereof.

Although the terms first, second, etc. may be used herein to describe various elements, it will be understood that these elements should not be limited by these terms. These terms are used solely to distinguish one element from another. For example, without departing from the scope of the present disclosure, a first component may be referred to as a second component, and similarly, the second component may also be referred to as the first component.

Relative terms such as "below," "above," "upper side," "lower side," "horizontal," and "vertical" may be used herein to describe the relationship between one element and another as illustrated in the drawings. It should be understood that these terms, along with the terms discussed above, are intended to include different directions of the apparatus in addition to the directions illustrated in the drawings. When a component is described as being "connected" or "coupled" to another component, it will be understood that the component may be directly connected or coupled to the other component, or may be connected or coupled via one or more intervening components. In contrast, when an element is described as "directly connected" or "directly coupled" to another element, no intervening element exists therebetween.

Unless otherwise defined, all terms used herein (including technical and scientific terms) have the same meaning as commonly understood by those skilled in the art to which the present disclosure pertains. The terms used herein are to be interpreted as having a meaning consistent with their meaning in the context of the specification and related art, and it is to be further understood that the terms will not be interpreted in an idealized or overly formal sense unless explicitly defined herein.

Hereinafter, one aspect of the present disclosure will be described in detail with reference to the accompanying drawings.

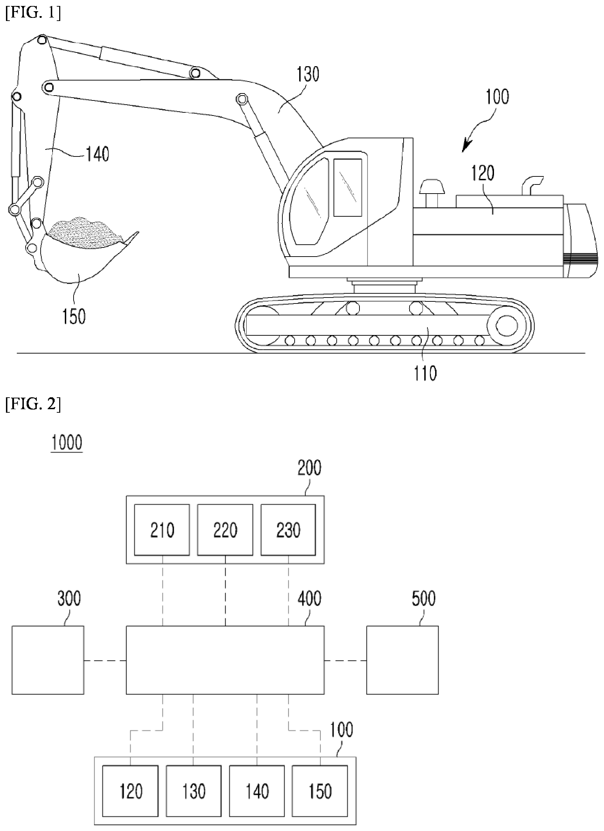

FIG. 1 is a diagram illustrating a drive unit of an excavator according to one aspect of the present disclosure, and FIG. 2 is a block diagram schematically illustrating a configuration of a system for controlling an excavator according to one aspect of the present disclosure.

Referring to FIGS. 1 and 2, the excavator is a device capable of excavating objects, and may include various types of excavators capable of performing excavation work in various ways, such as soil transport work, building demolition work, and ground leveling work.

In one embodiment, the excavator may be implemented by including a computing device that operates through a computer program to realize the functions described herein, and in another embodiment, the excavator may be controlled according to a control signal of a control unit.

A system 1000 for controlling an excavator to automatically return a bucket having loaded an object onto a load receiver to a digging position according to one aspect of the present disclosure includes a drive unit 100, a receiving unit 200, a display controller 300, a control unit 400, and an operation unit 500.

The drive unit 100 is configured to include an upper swing structure 120 that is supported to be swingable on a lower traveling structure 110, and a working device connected to the upper swing structure 120. The working device may include, for example, a boom 130, an arm 140, and a bucket 150.

The lower traveling structure 110 is configured to support the load of the upper swing structure 120, the boom 130, the arm 140, and the bucket 150, and move the excavator in the front-back direction or left-right direction for work purposes.

The upper swing structure 120 is configured to be supported on the lower traveling structure 110 and is designed to swing on the lower traveling structure 110 by a swing device including a swing motor, a swing reduction gear, and the like.

The arm 140 is connected to the bucket 150 and the boom 130, respectively, and according to one embodiment, the boom 130, the arm 140, and the bucket 150 are connected in this order from the upper swing structure 120 through joints, and each joint may be moved by a hydraulic cylinder.

For example, the arm 140 is connected, at one end thereof, to the boom 130 that is connected to the upper swing structure 120 of the excavator, and, at the other end thereof, is connected to the bucket 150, and the boom 130, the arm 140, and the bucket 150 may rotate about one or more axes by means of a boom cylinder, an arm cylinder, and a bucket cylinder, respectively, and the bucket 150 may accommodate an object (e.g., soil) on the ground according to rotation thereof, and the control unit 400 may control the entire operation.

Since the boom 130, the arm 140 and the bucket 150 are installed while being supported forward on the upper swing structure 120, when the upper swing structure 120 swings, the boom 130, the arm 140, and the bucket 150 swing together with the upper swing structure 120.

The drive unit 100 may be configured, for example, as an electro-hydraulic system, and the drive may be electronically controlled by the control unit 400.

The receiving unit 200 is configured to acquire various information necessary to perform an automatic digging position return function.

For example, the receiving unit 200 may include an inertial measurement unit (IMU) 210, a swing angle sensor 220, and an environment perception sensor 230, but is not limited thereto.

The inertial measurement unit (IMU) 210 is configured to measure a displacement, a position, and/or an attitude of one or more of the upper swing structure 120, the boom 130, the arm 140 and the bucket 150 constituting the drive unit 100. For example, the inertial measurement unit 210, which detects the displacement of the boom 130, the arm 140, and the bucket 150, respectively, to output a detection signal to the control unit 400, may be installed in the boom cylinder, the arm cylinder, and the bucket cylinder so as to calculate the angles of the boom 130, the arm 140, and the bucket 150 that operate when an automatic loading position arrival function is performed.

The swing angle sensor 220 is configured to measure a swing angle of the upper swing structure 120. That is, the swing angle sensor 220, which detects the swing angle of the upper swing structure 120 to output a detection signal to the control unit 400, may be installed on the upper swing structure 120.

The environment perception sensor 230 is configured to detect an external environment, and may include one or more terrain sensing sensors such as a camera, a radar, and a LiDAR. Through the environment perception sensor 230, information regarding the shape and/or position of a load receiver (e.g., dump truck, hopper, crusher), an excavation object contained in the bucket, an excavation object loaded onto the load receiver, an excavation object in the external environment, the shape and/or position of an obstacle positioned within a maximum swing radius, and the like, may be identified and measured.

The receiving unit 200 may acquire information necessary to perform the automatic digging position return function, such as information of terrain including an object, displacement, angle, and/or position information of the drive unit, shape and/or position information of the load receiver, shape and/or position information of the obstacle, and the like, wherein the object refers to an object to be excavated by the excavator, and may include any type of material that may be loaded or transported by the excavator, such as soil in soil transport work, building debris in building demolition work, and ground debris in ground leveling work.

The receiving unit 200 may receive information necessary to perform the automatic digging position return function from another device (e.g., server) or other components (e.g., memory, sensor, etc.), and may include a wired or wireless communication device that may be connected to another device via a network to transmit and receive various information described throughout the specification.

The receiving unit 200 may generate the information in real time through sensing the information necessary to perform the automatic digging position return function. For example, the receiving unit 200 may sense, in real time, information including the position and size of an object (e.g., soil) within a target area, which changes in real time, as the boom 130, the arm 140, or the bucket 150 of the excavator moves, the type of surrounding terrain, the angle between the object and the surrounding terrain, the shape or position of the load receiver, the shape or position of an obstacle, and the like through one or more terrain sensing sensors such as a camera, a radar, and a LiDAR.

The display controller 300 is an input/output interface for receiving a user input or outputting information. The display controller 300 activates the automatic digging position return function and displays the information acquired by the receiving unit 200 (e.g., position of the load receiver, position of the obstacle, terrain information, etc.) on a display. That is, an operator may activate or inactivate the automatic digging position return function by selecting the automatic digging position return function through the display controller 300. For example, the operator may activate or inactivate the automatic digging position return function by selecting the automatic digging position return function on a screen of the display controller 300 that provides a touchscreen function.

The operation unit 500 may be a hydraulic joystick or an electric joystick, preferably an electric joystick that generates an electrical signal proportional to an operator manipulation amount to provide the electrical signal to the control unit 400.

The operation unit 500 may set position coordinates (Xrt, Yrt, Zrt) of a destination point, which is a digging position to which the bucket will return. In addition, the operation unit 500 may be equipped with an input unit, for example, a button, that receives a user input for starting the automatic loading position arrival function. Accordingly, the operator may set the position coordinates (Xrt, Yrt, Zrt) of the destination point, which is the digging position to which the bucket will return, by means of the operation unit 500, may select the automatic digging position return function by the display controller 300 to activate the automatic digging position return function, and may push the button of the operation unit 500 to start the automatic digging position return function.

The control unit 400 processes the information acquired by the receiving unit 200, signals and the like from the display controller 300 and the operation unit 500, to control the drive unit 100 to automatically perform a desired operation.

The control unit 400 performs the automatic digging position return function by controlling the drive unit 100 such that the bucket 150 returns to the destination point, on the basis of the information acquired by the receiving unit 200 and the position coordinates (Xrt, Yrt, Zrt) of the destination point.

The control unit 400 calculates a swing angle θlr that allows for avoiding interference with the load receiver or the obstacle during a swing operation of the upper swing structure 120 for return to the digging position, on the basis of the acquired information of the load receiver or the acquired information of the obstacle, calculates a target rotational angle of one or more of the boom 130, the arm 140, and the bucket 150 for the bucket 150 to return to the position coordinates (Xrt, Yrt, Zrt) of the destination point, and a target swing angle of the upper swing structure 120, on the basis of the position coordinates (Xrt, Yrt, Zrt) of the destination point, and moves the boom 130 such that a lowermost end of the bucket 150 is positioned higher than a highest point of the obstacle when it is determined that the highest point of the obstacle is higher than a highest point of the load receiver, and may swing the upper swing structure 120 on the basis of the target swing angle, and moves one or more of the boom 130, the arm 140, and the bucket 150 until the bucket 150 arrives at the position coordinates (Xrt, Yrt, Zrt) of the destination point, when it is determined that the swing angle of the upper swing structure 120 exceeds the θlr and the upper swing structure 120 has entered a swing braking section.

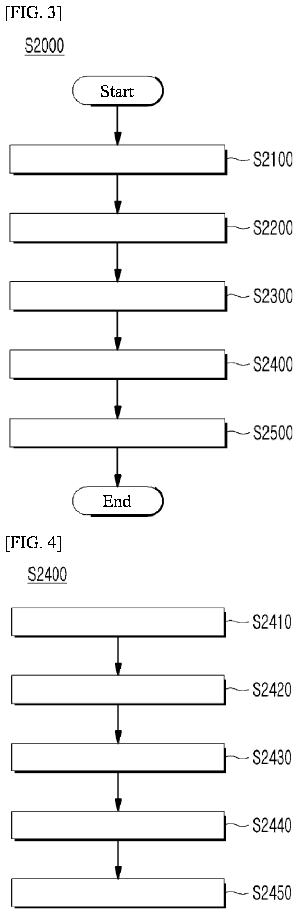

The above-described series of operations will be described in detail below with reference to FIGS. 3 to 8.

Throughout the specification, it will be understood by those skilled in the art that, in addition to the components illustrated in FIGS. 1 and 2, other general-purpose components may be further included in the excavator. For example, the excavator may further include various types of drive machines for moving each of the boom 130, arm 140, and bucket 150, a drive control module for detailed control of the same, pipes, and a memory for storing data used throughout the operation.

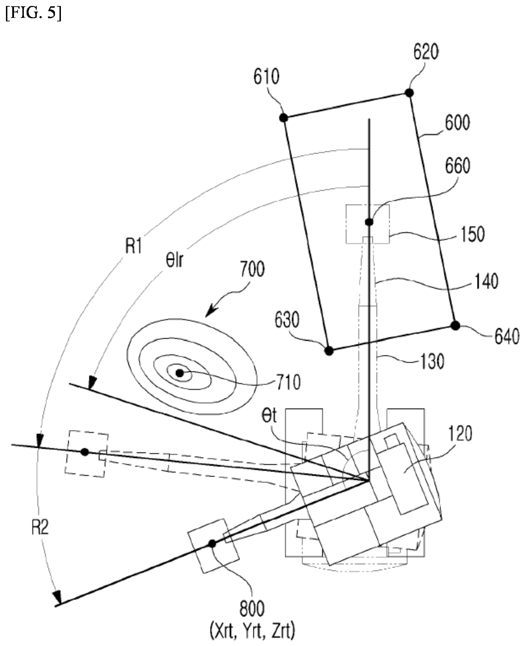

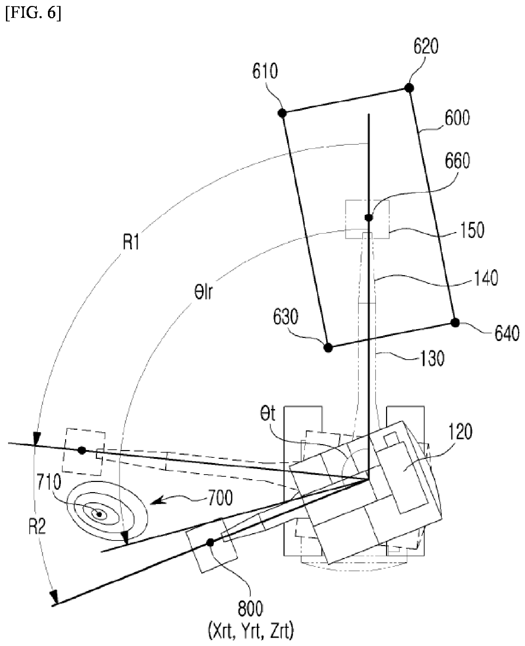

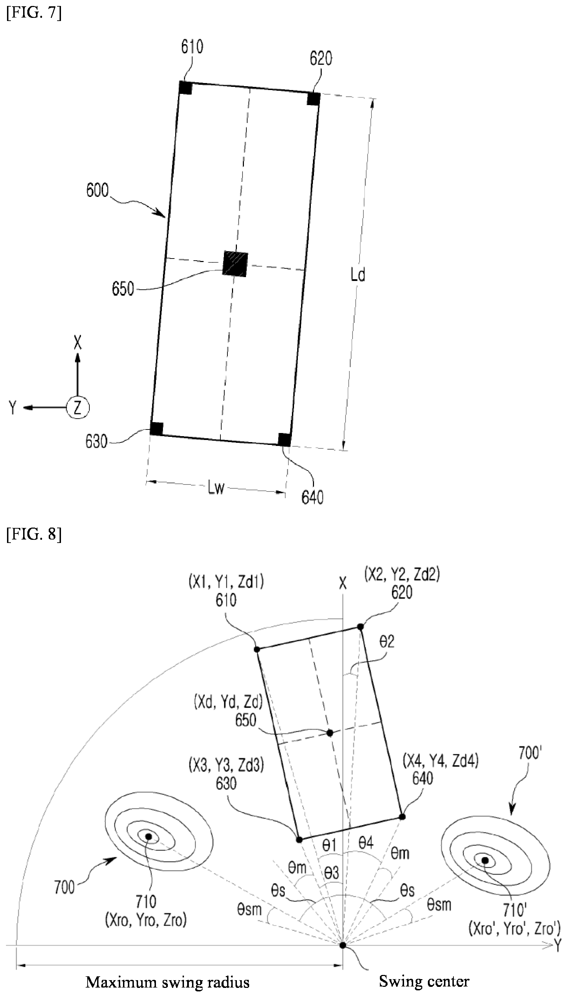

FIGS. 3 and 4 are flowcharts illustrating a method for controlling an excavator according to one embodiment, FIGS. 5 and 6 are conceptual diagrams illustrating a movement trajectory of an excavator performing an automatic digging position return function according to one embodiment, FIG. 7 is a diagram illustrating information of a load receiver necessary to perform the automatic digging position return function according to one embodiment, and FIG. 8 is a diagram illustrating a step of calculating θlr according to one embodiment.

Referring to FIG. 3, a method S2000 for controlling an excavator to automatically return the bucket 150 having loaded an object onto a load receiver to a digging position, includes: a step S2100 of setting position coordinates (Xrt, Yrt, Zrt) of a destination point, which is a digging position to which the bucket 150 will return, by means of an operation unit 500; a step S2200 of selecting and activating an automatic digging position return function by means of a display controller 300; a step S2300 of detecting a load receiver or an obstacle within a maximum swing radius and acquiring information necessary to perform the automatic digging position return function, by means of a receiving unit 200; and a step S2400 of performing the automatic digging position return function by means of a control unit 400 such that the bucket 150 returns to the destination point on the basis of the acquired information.

In step S2100, the position coordinates (Xrt, Yrt, Zrt) of the destination point, which is the digging position to which the bucket will return, may be set through the operation unit 500. For example, the operator may set the position coordinates (Xrt, Yrt, Zrt) of the destination point by pushing a button on the operation unit 500.

In step S2200, when the automatic digging position return function is selected by the display controller 300, the automatic digging position return function is activated. For example, the operator may activate the automatic digging position return function by selecting the automatic digging position return function by means of the display controller 300.

In step S2300, the receiving unit 200 detects the load receiver or the obstacle within the maximum swing radius and acquires information necessary to perform the automatic digging position return function, for example, information regarding the terrain including an object, displacement, angle, and/or position information of each drive unit 100, information regarding the load receiver and the obstacle, and the like.

Referring to FIGS. 7 and 8, information regarding the load receiver 600 may include, for example, the shape of the load receiver 600, position coordinates (X1, Y1, and Zd1) to (X4, Y4, and Zd4) of a first corner 610 to a fourth corner 640 of the load receiver 600, position coordinates (Xd, Yd, and Zd) of a center 650 of the load receiver 600, a length Ld and a width Lw of the load receiver 600, an uppermost height of the load receiver 600, an amount of objects loaded inside the load receiver 600, and the like. The information regarding the load receiver 600 may be acquired by the receiving unit 200, more specifically, by the environment perception sensor 230. The environment perception sensor 230 continuously detects the information until the automatic digging position return function is inactivated.

In addition, referring to FIG. 8, the information regarding an obstacle 700 may include, for example, whether the obstacle 700 exists within the maximum swing radius for return from a loading completion position to the digging position exists within the maximum swing radius, an outline of the obstacle 700, position coordinates (Xro, Yro, Zro) of a highest point of the obstacle 700, and the like.

In step S2400, the control unit 400 performs the automatic digging position return function on the basis of the information acquired from the receiving unit 200 such that the bucket 150 returns to the destination point, which is the digging position. In this case, the automatic digging position return function may be started by pushing a start button of the operation unit 500 by the operator.

Referring to FIGS. 4, 5 and 6, step S2400 includes detailed steps S2410, S2420, S2430, S2440, and S2450.

In step S2410, the control unit 400 calculates a swing angle θlr that allows for avoiding interference with the load receiver 600 or the obstacle 700 during the swing operation of the upper swing structure 120 for return to the digging position, on the basis of the acquired information of the load receiver 600 or the acquired information of the obstacle 700.

That is, the swing angle θlr refers to an angle at which the upper swing structure 120 needs to swing minimally without operation of the boom, the arm, and the bucket to prevent collision between any one of the boom, the arm, and the bucket and the load receiver 600 or the obstacle 700 during the swing operation of the upper swing structure 120.

Referring to FIG. 8, according to one embodiment, a method for calculating the swing angle θlr when the bucket returns, for example, from a starting point 660, which is the loading completion position of the bucket, to a destination point 800, which is the digging position, will be described.

In FIG. 8, during a process in which the upper swing structure swings, the first corner 610 and a third corner 630 of the load receiver 600 and a highest point 710 of the obstacle 700 are positioned on the left side relative to the X-axis, and a second corner 620 and the fourth corner 640 of the load receiver 600 and a highest point 710' of an obstacle 700' are positioned on the right side.

In this case, position coordinates of the first corner 610 of the load receiver 600 are (X1, Y1, Zd1), position coordinates of the second corner 620 are (X2, Y2, Zd2), position coordinates of the third corner 630 are (X3, Y3, Zd3), and position coordinates of the fourth corner 640 are (X4, Y4, Zd4), and position coordinates of the highest point 710 of the left obstacle are (Xro, Yro, Zro), and position coordinates of the highest point 710' of the right obstacle 710' are (Xro', Yro', Zro').

When the upper swing structure 120 swings to the left side, the control unit determines that Yi (Y1 and Y3) < 0 and Yro < 0, and calculates θ1, θ3, and θs as follows.$θ 1 = atan \left(Y1/X1\right) ,$$θ 3 = atan \left(Y3/X3\right) ,$$θs = atan \left(Yro/Xro\right) .$

In this case, θ1 represents a swing angle from a starting point 660 to the first corner 610, θ3 represents a swing angle from the starting point 660 to the third corner 630, and θs represents a swing angle from the starting point 660 to the highest point 710 of the obstacle 700.

In addition, when there are no obstacles within the maximum swing radius to the destination point, or when Z-direction coordinates of the highest point of the obstacle are smaller than Z-direction coordinates of the destination point (Zro < Zrt), the control unit calculates θlr as follows.$θlr = Max \left(θ1, θ3\right) + θm .$

In this case, θm represents a preset margin angle for the load receiver.

Alternatively, when there is an obstacle within the maximum swing radius to the destination point and the Z-direction coordinates of the highest point of the obstacle are greater than or equal to the Z-direction coordinates of the destination point (Zro' ≥ Zrt), the control unit calculates θlr as follows.$θlr = θs + θsm .$

In this case, θsm represents a preset margin angle for the obstacle.

When the upper swing structure 120 swings to the right side, the control unit determines that Yi (Y2 and Y4) > 0 and Yro' > 0, and calculates θ2, θ4, and θs as follows.$θ 2 = atan \left(Y2/X2\right) ,$$θ 4 = atan \left(Y4/X4\right) ,$$θs = atan \left(Yro′/Xro′\right) .$

In this case, θ2 represents a swing angle from the starting point 660 to the second corner 620, θ4 represents a swing angle from the starting point 660 to the fourth corner 640, and θs represents a swing angle from the starting point 660 to the highest point 710' of the obstacle 700'.

In addition, when there are no obstacles within the maximum swing radius to the destination point, or when a Z-direction coordinate of the highest point of the obstacle is smaller than a Z-direction coordinate of the destination point (Zro' < Zrt), the control unit calculates θlr as follows.$θlr = Max \left(θ2, θ4\right) + θm .$

In this case, θm represents a preset margin angle for the load receiver.

Alternatively, when there is an obstacle within the maximum swing radius to the destination point and the Z-direction coordinates of the highest point of the obstacle are greater than or equal to the Z-direction coordinates of the destination point (Zro' ≥ Zrt), the control unit calculates θlr as follows.$θlr = θs + θsm .$

In this case, θsm represents a preset margin angle for the obstacle.

In this way, the control unit 400 may calculate θlr, which is a swing angle that may avoid interference with the load receiver 600 or the obstacle 700. In this manner, the control unit 400 may prevent collision with the load receiver 600 or the obstacle 700 by not allowing the operation of the boom 130, the arm 140, and the bucket 150 when the swing angle of the upper swing structure 120 has not reached the θlr.

In step S2420, the control unit 400 calculates, on the basis of the position coordinates (Xrt, Yrt, Zrt) of the destination point 800, the target rotational angle of one or more of the boom 130, the arm 140, and the bucket 150, and a target swing angle θt of the upper swing structure for the bucket 150 to return to the position coordinates (Xrt, Yrt, Zrt) of the destination point 800.

The target rotational angle of one or more of the boom 130, the arm 140, and the bucket 150 and the target swing angle of the upper swing structure 120 may be calculated through an inverse kinematics model. The inverse kinematics model refers to a model that calculates a corresponding joint angle when the position and posture of an end thereof is given.

In step S2430, when it is determined that an uppermost point of the obstacle is higher than an uppermost point of the load receiver, the control unit 400 moves the boom 130 such that a lowermost end of the bucket 150 is positioned higher than the uppermost point of the obstacle.

That is, when the boom 130 is moved such that the lowermost end of the bucket 150 is higher than the uppermost point of the obstacle, the swing operation of the upper swing structure 120 is performed, thereby preventing collision between the bucket 150 and the obstacle.

In addition, the control unit 400 may control the upper swing structure 120 such that swing operation is not allowed when the movement of the boom 130 is not completed.

In step S2440, the control unit 400 swings the upper swing structure 120 on the basis of the calculated target swing angle θt such that the bucket 150 reaches the destination point 800.

According to one embodiment, the swing section according to the target swing angle θt may be divided into a first section R1 in which the upper swing structure 120 is accelerated (swing acceleration) to a preset swing speed or a maximum swing speed and performs a uniform circular motion when reaching the preset swing speed or the maximum swing speed and a second section R2 which is a braking section where swing braking of the upper swing structure 120 is performed.

The control unit 400 reduces the swing speed of the upper swing structure 120 when the bucket 150 enters the second section R2, which is the swing braking section, during the swing of the upper swing structure 120. The swing braking section may be calculated in consideration of, for example, the moment of inertia of the upper swing structure 120, the swing braking torque, and the current swing speed.

In step S2450, when it is determined that the swing angle of the upper swing structure 120 exceeds θlr and the upper swing structure 120 has entered the swing braking section R2, the control unit 400 moves one or more of the boom 130, the arm 140, and the bucket 150 until the bucket 150 reaches the position coordinates (Xrt, Yrt, Zrt) of the destination point 800.

That is, the control unit 400 controls the operations of the boom 130, the arm 140 and the bucket 150, particularly the operation of the arm 140, to be activated only when the swing angle of the upper swing structure 120 exceeds θlr and the upper swing structure 120 enters the swing braking section R2.

In the process in which the bucket 150 returns to the digging position, how fast the swing of the upper swing structure 120 is performed is an important part of the automatic digging position return function. For example, when the operation of the arm 140 is activated in the first section R1 where swing acceleration and uniform motion occur, hydraulic distribution is performed between the upper swing structure 120 and the arm 140, so that the swing speed of the upper swing structure 120 is reduced. Therefore, in order to obtain the fastest cycle time, it is desirable not to activate the operations of the boom 130, arm 140, and bucket 150, especially the operation of the arm 140, during the first section R1 where swing acceleration and uniform motion are performed.

Accordingly, as illustrated in FIG. 5, even if the swing angle of the upper swing structure 120 exceeds θlr, when the upper swing structure 120 does not enter the second section R2, the control unit 400 controls the operations of the boom 130, the arm 140 and the bucket 150, particularly, the operation of the arm 140, not to be activated.

Further, as illustrated in FIG. 6, even if the upper swing structure 120 enters the second section R2, when the swing angle of the upper swing structure 120 does not exceed θlr, the control unit 400 controls the operations of the boom 130, the arm 140, and the bucket 150, particularly, the operation of the arm 140, not to be activated.

Meanwhile, the method S2000 for controlling an excavator to automatically return the bucket 150 having loaded an object onto a load receiver to a digging position may further include a step S2500 of determining whether the bucket 150 has reached the destination point 800 by the control unit 400.

In step S2500, when it is determined that the bucket 150 has reached the destination point 800 within a preset time (e.g., 30 seconds), the control unit 400 causes the display controller 300 to display that the automatic digging position return function has been completed. In addition, when it is determined that the bucket 150 has not reached the destination point 800 within the preset time, the control unit 400 recognizes the determination as an error and causes the display controller 300 to display the same, while performing the automatic digging position return function until the bucket 150 reaches the destination point 800.

Meanwhile, after the automatic digging position return function has been performed once, when the operator pushes the start button of the operation unit 500 again to return the bucket 150 from the loading completion position to the digging position, the automatic digging position return function starts from step S2400 (the automatic digging position return function remains active).

Meanwhile, when the operator no longer needs to use the automatic digging position return function, the operator inactivates the automatic digging position return function through the display controller 300 to terminate the automatic digging position return function.

As described above, the method and the system for controlling an excavator according to the present disclosure may improve work efficiency and operator convenience by performing the automatic digging position return function that automatically returns the bucket having loaded the object to the digging position.

It should be understood that the present disclosure is not limited to the aspects described above and illustrated in the drawings. Rather, those skilled in the art will recognize that many changes and modifications can be made within the scope of the present disclosure and the appended claims. In the drawings and specification, aspects have been disclosed for purposes of illustration only, not for purposes of limitation, and the scope of the concept of the disclosure is set forth in the following claims.

### Description of Reference Numerals

1000 system for controlling excavator
100 drive unit
110 lower traveling structure
120 upper swing structure
130 boom
140 arm
150 bucket
200 receiving unit
210 inertial measurement device
220 swing angle sensor
230 environment perception sensor
400 control unit
500 operation unit
600 load receiver
610 first corner
620 second corner
630 third corner
640 fourth corner
650 center of load receiver
660 starting point
700, 700' obstacle
800 destination point

## Claims

1. A method for controlling an excavator to automatically return a bucket having loaded an object onto a load receiver to a digging position, the method comprising the steps of:
setting position coordinates (Xrt, Yrt, Zrt) of a destination point, which is a digging position to which the bucket will return, by means of an operation unit;
selecting and activating an automatic digging position return function by means of a display controller;
detecting a load receiver or an obstacle within a maximum swing radius and acquiring information necessary to perform the automatic digging position return function, by means of a receiving unit; and
performing the automatic digging position return function by means of a control unit such that the bucket returns to the destination point on the basis of the acquired information.

2. The method of claim 1,
wherein the step of performing the automatic digging position return function includes the steps of:
calculating a swing angle θlr that allows for avoiding interference with the load receiver or the obstacle during a swing operation of an upper swing structure for return to the digging position, on the basis of the acquired information of the load receiver or the acquired information of the obstacle;
calculating a target rotational angle of one or more of a boom, an arm, and a bucket for the bucket to return to the position coordinates (Xrt, Yrt, Zrt) of the destination point, and a target swing angle of the upper swing structure, on the basis of the position coordinates (Xrt, Yrt, Zrt) of the destination point;
moving the boom such that a lowermost end of the bucket is positioned higher than an uppermost end point of the obstacle when it is determined that the uppermost end point of the obstacle is higher than an uppermost end point of the load receiver; and
swinging the upper swing structure on the basis of the target swing angle; and moving one or more of the boom, the arm, and the bucket until the bucket arrives at the position coordinates (Xrt, Yrt, Zrt) of the destination point, when it is determined that the swing angle of the upper swing structure exceeds the θlr and the upper swing structure has entered a swing braking section.

3. The method of claim 2,
wherein, in the step of swinging the upper swing structure,
operations of the boom, the arm, and the bucket are not allowed to prevent collision with the load receiver or the obstacle in a state where the swing angle of the upper swing structure does not reach the θlr.

4. The method of claim 1,
further comprising the step of determining whether the bucket has arrived at the destination point by means of the control unit.

5. The method of claim 4,
wherein, in the step of determining whether the bucket has arrived at the destination point,
when it is determined that the bucket has reached the destination point within a preset time, the display controller displays that the automatic digging position return function has been completed, and
when it is determined that the bucket has not arrived at the destination point within the preset time, the determination is recognized as an error and displayed on the display controller, while the automatic digging position return function is performed until the bucket arrives at the destination point.

6. A system for controlling an excavator to automatically return a bucket having loaded an object onto a load receiver to a digging position, the system comprising:
an operation unit that sets position coordinates (Xrt, Yrt, Zrt) of a destination point, which is a digging position to which the bucket will return;
a drive unit including a boom, an arm, a bucket, and an upper swing structure;
a receiving unit that detects a load receiver or an obstacle within a maximum swing radius and acquires information necessary to perform an automatic digging position return function;
a display controller that activates the automatic digging position return function and displays the information acquired by the receiving unit, the display controller serving as an input/output interface for receiving a user input and outputting information; and
a control unit that performs the automatic digging position return function by controlling the drive unit such that the bucket returns to the destination point, on the basis of the information acquired by the receiving unit and the position coordinates (Xrt, Yrt, Zrt) of the destination point.

7. The system of claim 6,
wherein the control unit
calculates a swing angle θlr that allows for avoiding interference with the load receiver or the obstacle during a swing operation of the upper swing structure for return to the digging position, on the basis of the acquired information of the load receiver or the acquired information of the obstacle,
calculates a target rotational angle of one or more of the boom, the arm, and the bucket for the bucket to return to the position coordinates (Xrt, Yrt, Zrt) of the destination point, and a target swing angle of the upper swing structure, based on the position coordinates (Xrt, Yrt, Zrt) of the destination point, and moves the boom such that a lowermost end of the bucket is positioned higher than a highest point of the obstacle when it is determined that the uppermost end point of the obstacle is higher than a highest point of the load receiver, and
swings the upper swing structure on the basis of the target swing angle, and moves one or more of the boom, the arm, and the bucket until the bucket arrives at the position coordinates (Xrt, Yrt, Zrt) of the destination point, when it is determined that the swing angle of the upper swing structure exceeds the θlr and the upper swing structure has entered a swing braking section.

8. The system of claim 7,
wherein the control unit
does not allow operations of the boom, the arm, and the bucket to prevent collision with the load receiver or the obstacle in a state where the swing angle of the upper swing structure does not reach the θlr.

9. The system of claim 6,
wherein the control unit
determines whether the bucket has arrived at the destination point,
wherein, when it is determined that the bucket has reached the destination point within a preset time, the control unit causes the display controller to display that the automatic digging position return function has been completed, and
wherein, when it is determined that the bucket has not arrived at the destination point within the preset time, the control unit recognizes the determination as an error and causes the display controller to display the same, while performing the automatic digging position return function until the bucket arrives at the destination point.
